# EUROPEAN PATENT APPLICATION

(11) **EP 4 711 158 A1**
(43) Date of publication of application: **18.03.2026**
(21) Application number: 24858167.0
(22) Date of filing: 25.07.2024
(51) Int. Cl.: B60G 17/04

(54) **GAS SUPPLY SYSTEM AND AIR SPRING SYSTEM HAVING GAS SUPPLY SYSTEM**

(30) Priority: 31.08.2023 CN 202311124480; 31.08.2023 CN 202322364865 U
(71) Applicant: Bethel Automotive Safety Systems Co., Ltd., Wuhu, Anhui 241009 (CN)
(72) Inventor: LIN, Xinchun, Wuhu, Anhui 241009 (CN); SHAN, Shuai, Wuhu, Anhui 241009 (CN)
(74) Representative: Canzler & Bergmeier Patentanwälte Partnerschaft mbB
(86) International application number: PCT/CN2024/107620
(87) International publication number: WO 2025/044624

(57) **Abstract**

A gas supply system, comprising a gas supply unit (1), a drying unit (105), a pipeline unit (103) and a gas storage unit, the gas supply unit (1) being connected to the drying unit (105) by means of the pipeline unit (103); the gas supply unit (1) comprises a valve block (2), a gas pressure control unit being provided in the valve block (2), and the gas pressure control unit comprising a gas-supplying unit (101), an air spring control unit (102) and a connection control unit; the gas pressure control unit is connected to the gas storage unit, the gas storage unit comprising a first gas storage unit (210) or/and a second gas storage unit (220); the drying unit is independent of the gas supply unit so as to facilitate subsequent replacement of the drying unit. Meanwhile, the gas storage unit is provided with the first gas storage unit and the second gas storage unit, which can be compatible with the connection and use modes of a single gas storage unit and double gas storage units. Further disclosed is an air spring system having the gas supply system.

## Description

### TECHNICAL FIELD

The present disclosure relates to the field of vehicle parts, and in particular to a gas supply system and an air spring system having the same.

### BACKGROUND

An air spring device for a vehicle is known from the document 201580019730.9 titled "Integrated Air Supply Unit". The device includes the essential components of a current air spring system.

The air spring device includes a compressor, a gas dryer, a pressure accumulator, and various valves and compressed gas pipelines. In addition, the air spring device further includes a pressure sensor controlled by a controller.

According to the prior art, an air supply system for an air spring system typically includes an air compressor, a valve block, a dryer and a controller. In order to reduce the occupied space, these main components are usually designed in an integrated manner.

Traditionally, the dryer is arranged in the valve block. In order to avoid interference during mounting, the position of the dryer is relatively limited, which is not conducive to flexible arrangement during actual use.

Meanwhile, if the dryer is integrated into the valve block using the conventional design, when the dryer is damaged and needs to be replaced, it will inevitably increase the difficulty of replacing the dryer.

In addition, the entire structure of the traditional air supply system used on the air spring device is relatively simple. Although the overall cost is relatively uniform, when it is used for vehicles that do not need to adjust the body height or do not need to adjust the body height frequently, it causes waste of parts. In other words, the traditional gas supply system cannot change its own structural design as needed, and the overall scope of application is poor.

Therefore, in order to solve or improve at least one of the above problems, it needs to optimize the design of the existing gas supply system or air spring system.

### SUMMARY

The present disclosure provides a gas supply system which is convenient for replacing a dryer.

The gas supply system includes a gas supply unit, a drying unit, a pipeline unit, and a gas storage unit.

The gas supply unit is connected to the drying unit through the pipeline unit.

The gas supply unit includes a valve block and an ECU; a gas pressure control unit is disposed in the valve block.

The gas pressure control unit includes a gas supplying unit, an air spring control unit and a connection control unit.

The gas supplying unit is connected to the air spring control unit and/or the connection control unit through the drying unit.

The pipeline unit includes external pipelines; the drying unit is connected to the gas supplying unit and the air spring control unit, respectively, through the external pipeline.

The gas pressure control unit is connected to the gas storage unit; the gas storage unit includes a first gas storage unit and/or a second gas storage unit; the first gas storage unit and/or the second gas storage unit are connected to the air spring control unit.

The gas pressure control unit further includes a first connection control unit, and the drying unit is connected to the air spring control unit through the first connection control unit; the first connection control unit includes a first connection pipeline, and the first connection pipeline is provided with an eighth control valve; one end of the first connection pipeline is connected to one of the external pipes on the drying unit, and the other end of the first connection pipeline is connected to the air spring control unit.

The gas pressure control unit further includes a second connection control unit; one end of the second connection control unit is connected to the air spring control unit, and the other end of the second connection control unit is connected to the gas supplying unit; the second connection control unit includes a second connection pipeline, and the second connection pipeline is provided with a seventh control valve; one end of the second connection pipeline is connected to the air spring control unit, and the other end of the second connection pipeline is connected to an intake pipe in the gas supplying unit.

The gas pressure control unit further includes a third connection control unit; one end of the third connection control unit is connected to the first gas storage unit, and the other end of the third connection control unit is connected to the gas supplying unit; the third connection control unit includes a third connection pipeline, and the third connection pipeline is provided with a sixth control valve; one end of the third connection pipeline is connected to the first gas storage unit, and the other end of the third connection pipeline is connected to the intake pipeline in the gas supplying unit.

The gas pressure control unit further includes a fourth connection control unit and/or a fifth connection control unit; one end of the fourth connection control unit is connected to the first gas storage unit, and the other end of the fourth connection control unit is connected to the first connection control unit or the air spring control unit, and the fourth connection control unit includes a fourth connection pipeline, and the fourth connection pipeline is provided with a fifth control valve.

One end of the fourth connection pipeline is connected to the first gas storage unit, and the other end of the fourth connection pipeline is connected to the first connection control unit or the air spring control unit.

One end of the fifth connection control unit is connected to the second gas storage unit, and the other end of the fifth connection control unit is connected to the intake pipeline in the gas supplying unit and/or the second connection control unit and/or the third connection control unit.

The fifth connection control unit includes a fifth connection pipeline, the fifth connection pipeline is provided with a ninth control valve; one end of the fifth connection pipeline is connected to the second gas storage unit, and the other end of the fifth connection pipeline is connected to the intake pipeline in the gas supplying unit and/or the second connection control unit and/or the third connection control unit.

The gas supplying unit includes a compressor; the compressor is connected to an intake pipeline.

The drying unit includes a dryer.

The first gas storage unit includes a first gas storage tank, and the first gas storage tank is connected to the fourth connection control unit.

The second gas storage unit includes a second gas storage tank, and the second gas storage tank is connected to the fifth connection control unit; a gas pressure in the second gas storage unit is lower than a gas pressure in the first gas storage unit.

The gas pressure control unit further includes a sixth connection control unit; the sixth connection control unit includes a sixth connection pipeline, and the sixth connection pipeline is provided with a fifteenth control valve; the sixth connection control unit is connected to an adjacent external pipeline.

The gas pressure control unit further includes a pressure limiting control unit; the pressure limiting control unit includes a pressure limiting pipeline; the pressure limiting pipeline is provided with a pressure limiting valve; and the pressure limiting pipeline is connected to an adjacent external pipeline.

The gas pressure control unit further includes a detection unit connected to the air spring control unit; the detection unit includes a pressure sensor disposed on the air spring control unit.

The present disclosure further provides an air spring system for a vehicle. The system includes an air spring assembly. The air spring assembly includes a plurality of air springs; the air spring assembly is connected to the gas supply system.

The advantages of the present disclosure are as follows:

The present disclosure discloses a gas supply system and an air spring system having the same.

The drying unit of the gas supply system disclosed in the present disclosure is arranged independently of the gas supply unit, and the drying unit and the gas supply unit are connected through the external pipeline, so as to facilitate the subsequent replacement of the drying unit.

Meanwhile, the external drying unit facilitates the separate arrangement of the drying unit. By controlling the length and arrangement of the external pipeline, the arrangement position of the drying unit can be changed as needed during actual use, thereby optimizing the spatial arrangement of the entire gas supply system and reducing interference between the gas supply system and adjacent components.

Meanwhile, the present disclosure can improve the adjustment response speed of the air spring in the vehicle using the gas supply system by setting the gas storage unit.

In addition, through the coordinated use of the first gas storage unit and the second gas storage unit, the gas supply system disclosed in the present disclosure can be compatible with the connection mode of the storage unit and double gas storage units in actual use; and the adjustment response speed of the air spring in the vehicle can be improved more quickly..

### BRIEF DESCRIPTION OF THE DRAWINGS

The following is a brief description of the contents expressed in each of the drawings in the specification of the present disclosure:
FIG. 1 is a schematic structural diagram of the present disclosure.
FIG. 2 is a schematic structural diagram of a first embodiment of the present disclosure.

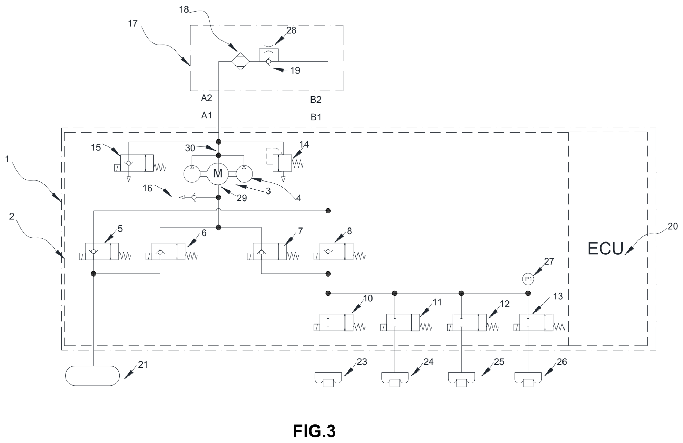

FIG. 3 is a schematic structural diagram of a first embodiment of the present disclosure.

1. Gas supply unit, 101. gas supplying unit, 102. air spring control unit, 103. pipeline unit, 104. fourth connection control unit, 105. drying unit, 106. pressure limiting control unit, 107. first connection control unit, 108. second connection control unit, 109. sixth connection control unit, 110. third connection control unit, 111. fifth connection control unit, 2. valve block, 210. first gas storage unit, 220. second gas storage unit, 3. compressor, 4. air compression pump, 5. fifth control valve, 6. sixth control valve, 7. seventh control valve, 8. eighth control valve, 9. ninth control valve, 10. tenth control valve; 11. eleventh control valve; 12. twelfth control valve; 13. thirteenth control valve; 14. fourteenth control valve; 15. fifteenth control valve; 16. one-way valve, 17. dryer.

### DETAILED DESCRIPTION

The specific implementation of the present disclosure will be further explained in detail below by describing the optimal embodiments with reference to the accompanying drawings.

The present disclosure provides a gas supply system, which includes a gas supply unit 1, a drying unit 105, a pipeline unit 103 and a gas storage unit. The gas supply unit 1 is connected to the drying unit 105 through the pipeline unit 103. The present disclosure can facilitate the connection between the gas supply unit 1 and the drying unit 105 through the above arrangement. In actual use, the pipeline unit 103 includes external pipelines 1031; the drying unit 105 is respectively connected to a gas supplying unit 101 and an air spring control unit 102 through the external pipelines 1031. The drying unit 105 of the gas supply system disclosed in the present disclosure is arranged independently of the gas supply unit 1, and the drying unit 105 and the gas supply unit 1 are connected through external pipelines 1031, so as to facilitate the subsequent replacement of the drying unit 105. Meanwhile, the external drying unit 105 allows for separate arrangement configurations. Subsequently, by controlling the length and arrangement of the external pipelines 1031, the arrangement position of the drying unit 105 can be changed as needed in actual use, thereby optimizing the spatial arrangement of the entire gas supply system and reducing interference between the gas supply system and adjacent components.

The gas supply system disclosed in the present disclosure mainly includes the gas supply unit 1. The gas supply unit 1 is mainly used for controlling gas in a corresponding air spring during subsequent use to achieve use and control of the air spring, and also facilitates subsequent height control of the vehicle using the gas supply system.

The gas running in the gas supply system of the present disclosure can be air, nitrogen, argon, etc., which can be selected and used according to needs.

In the present disclosure, the gas supply unit 1 includes a valve block 2. The exterior of the valve block 2 serves as the main support structure, and its interior is hollow, which facilitates the arrangement and placement of the gas pressure control unit. In addition, in the present disclosure, the valve block 2 is connected to an ECU 20 for controlling a corresponding valve body in the gas pressure control unit. Specifically, the gas supply unit 1 includes the valve block 2 and an ECU; the gas pressure control unit is provided inside the valve block 2; the setting of the gas pressure control unit is convenient for controlling a flow direction of the gas in the gas supply system. Meanwhile, in the present disclosure, the gas pressure control unit includes the gas supplying unit 101, the air spring control unit 102, and the connection control unit; the gas supplying unit 101 is connected to the air spring control unit 102 and/or the connection control unit through the drying unit 105. The setting of the gas supplying unit 101 is convenient for subsequent control of gas entering and exiting the air spring control unit 102; meanwhile, the air spring control unit 102 is mainly used for connecting with an air spring assembly 201 to finally realize the subsequent control operation of the corresponding air spring. Meanwhile, the gas supplying unit 101 can also perform a subsequent inflation operation for the gas storage unit, ensuring the air pressure in the gas storage unit.

In the present disclosure, the gas supplying unit 101 is connected to the air spring control unit 102 and/or the connection control unit through the drying unit 105. The gas supplying unit 101 is generally connected to the air spring control unit 102 and/or the connection control unit through a dryer 17. In specific implementation, the gas supplying unit 101 is generally connected to a first connection control unit 107 among corresponding connection control units through the drying unit 105, and then connected to the air spring control unit 102. In this way, it is convenient for the gas supplying unit 101 to subsequently control the air spring control unit 102. In the present disclosure, the gas supplying unit 101 is also directly or indirectly connected to the first connection control unit 107, a second connection control unit 108, a third connection control unit 110, a fourth connection control unit 104, a fifth connection control unit 111 and a sixth connection control unit of the present disclosure, which can be found in the accompanying drawings for details.

In addition, the present disclosure requires that the gas supplying unit 101 is connected to the air spring control unit 102 through the drying unit 105; the pipeline unit 103 includes external pipelines 1031; the drying unit 105 is respectively connected to the gas supplying unit 101 and the air spring control unit 102 through the external pipelines 1031. The setting of the drying unit 105 allows the gas provided by the gas supplying unit 101 to enter the corresponding air spring control unit 102 after drying, ultimately ensuring the dryness of the gas subsequently entering the air spring assembly 201.

In addition, the setting of the drying unit 105 also ensures the dryness of the gas stored in the first gas storage unit 210 and the gas pressure control unit.

Meanwhile, in the present disclosure, the gas pressure control unit is also connected to a gas storage unit; the gas storage unit includes a first gas storage unit 210 and/or a second gas storage unit 220; the first gas storage unit 210 and/or the second gas storage unit 220 are connected to the air spring control unit 102. In actual design, the gas storage unit can also be provided with other gas storage units, such as a third gas storage unit or a fourth gas storage unit, and the actual design quantity is selected according to needs. The purpose of such design is mainly that the gas supply system of the present disclosure can be compatible with a single gas storage unit and double gas storage units, or even more gas storage connection modes, thereby facilitating use in actual production.

In actual use, for the sake of cost and convenience of subsequent arrangement on the vehicle, the gas storage unit generally includes the first gas storage unit 210 and the second gas storage unit 220 in actual design.

In actual use, the first gas storage unit 210 and the second gas storage unit 220 can be set as needed. The specific design solutions include three types.

The first type of design is to only set the first gas storage unit 210; the second type of design is to only set the second gas storage unit 220; and the third type of design is to set both the first gas storage unit 210 and the second gas storage unit 220.

Through the above design, the gas supply system disclosed in the present disclosure can realize a connection mode compatible with a single gas storage unit and doubles gas storage units, and can more quickly improve the response speed of the present disclosure.

In the present disclosure, the gas pressure control unit is connected to the gas storage unit; the gas storage unit includes the first gas storage unit 210 and/or the second gas storage unit 220; the first gas storage unit 210 and/or the second gas storage unit 220 are connected to the air spring control unit 102. In the present disclosure, the first gas storage unit 210 is connected to the air spring control unit 102. In the present disclosure, the setting of the first gas storage unit 210 can perform an air supply operation for the air spring in subsequent use, and can also collect exhaust gas relative to the air spring. In actual use, when it needs to perform the air supply operation to the air spring control unit 102, the gas stored in the gas storage unit disclosed in the present disclosure can assist the gas supplying unit 101 to quickly realize the air supply operation to the air spring control unit 102; when the vehicle body needs to descend or the air spring assembly 201 needs to perform an exhaust operation, the exhaust gas of the air spring assembly 201 can be stored in the gas storage unit through the air spring control unit 102.

In actual implementation, the first gas storage unit 210 of the present disclosure is connected to the air spring control unit 102 through the fourth connection control unit 104. Specifically, the fourth connection control unit 104 is connected to the air spring control unit 102 through the first connection control unit 107.

Specifically, in the present disclosure, the first gas storage unit 210 includes a first gas storage tank 21. The first gas storage tank 21 mainly has two functions, one function is to store gas, and the other function is to perform the air supply operation for the air spring assembly 201. In the present disclosure, the first gas storage tank 21 is connected to the air spring control unit 102 through the fourth connection control unit 104, so as to facilitate the coordinated use between the first gas storage tank 21 and the air spring control unit 102. The fourth connection control unit 104 is provided with a fifth control valve 5. The fifth control valve 5 is mainly provided to control on and off of a fourth connection pipeline 1041, thereby facilitating changing a flow direction of the gas as needed during subsequent use, and realizing the storage and discharge of the gas in the first gas storage tank 21.

In addition, the gas storage unit in the present disclosure further includes the second gas storage unit 220; the second gas storage unit 220 is connected to the gas supplying unit 101, the first connection control unit 107 and the second connection control unit 108. The present disclosure improves the response speed of the gas pressure control unit to the control of the air spring assembly 201 through the setting of the second gas storage unit 220. In the present disclosure, the second gas storage unit 220 includes a second gas storage tank 22. The second gas storage tank 22 is connected to an intake pipeline 291 and/or a second connection pipeline 1081 and a third connection pipeline 1101 through a fifth connection pipeline 1111. The fifth connection pipeline 1111 is provided with a ninth control valve 9. The present disclosure facilitates the connection between the second gas storage tank 22 and the corresponding components through the setting of the fifth connection pipeline 1111, and the setting of the ninth control valve 9 is mainly used for control on and off of the fifth connection pipeline 1111, so as to facilitate the control of discharge of the gas in the second gas storage tank 22 and the control of the external gas entering the second gas storage tank 22.

Meanwhile, in actual design, other gas storage units may be provided, such as a third gas storage unit or a fourth gas storage unit, and the actual design quantity is selected according to needs. The purpose of such design is mainly that the gas supply system of the present disclosure can be compatible with a single gas storage unit and double gas storage units, or even more gas storage connection modes, thereby facilitating use in actual production.

In actual use, for the sake of cost and convenience of subsequent arrangement on the vehicle, the gas storage unit generally includes the first gas storage unit 210 and the second gas storage unit 220 in actual design.

In actual use, the first gas storage unit 210 and the second gas storage unit 220 can be set as needed; the specific design solutions include three types.

The first type of design is to only set the first gas storage unit 210; the second type of design is to only set the second gas storage unit 220; and the third type of design is to set both the first gas storage unit 210 and the second gas storage unit 220.

Through the above design, the gas supply system disclosed in the present disclosure can realize a connection mode compatible with a single gas storage unit and double gas storage units; and can more quickly improve the response speed of the present disclosure.

In addition, in actual design, it is required that a gas pressure in the second gas storage tank 22 is lower than a gas pressure in the first gas storage tank 21. In actual use, the gas in the second gas storage tank 22 can be transferred to the first gas storage tank 21, so that the second gas storage tank 22 is in a low-pressure state for a long time, thereby achieving a response speed when the vehicle body is lowered.

During subsequent use, the first gas storage unit 210 and the second gas storage unit 220 can cooperate with each other and be used simultaneously, which allows the gas storage unit to have the technical effects of both the first gas storage unit 210 and the second gas storage unit 220, and to change the flow control of the gas in the gas supply system as needed, making it convenient to use in actual production.

Furthermore, in the present disclosure, the gas pressure control unit further includes the first connection control unit 107, and the drying unit 105 is connected to the air spring control unit 102 through the first connection control unit 107. The first connection control unit 107 is provided mainly for the connection between the dryer 17 and the air spring control unit 102; meanwhile, with the setting of the eighth control valve 8, whether the dryer 17 is connected to the air spring control unit 102 can be controlled as needed, which is also convenient to cooperate with the gas supplying unit 101, the first connection control unit 107 and other components to realize the inflation operation of the first gas storage tank 21 and/or the second gas storage tank 22. Specifically, in the present disclosure, the first connection control unit 107 includes a first connection pipeline 1071, and the first connection pipeline 1071 is provided with an eighth control valve 8. One end of the first connection pipeline 1071 is connected to the external pipeline 1031 on the drying unit 105, and the other end is connected to the air spring control unit 102; specifically, one end of the first connection pipeline 1071 is connected to the external pipeline 1031 on the drying unit 105, and the other end of the first connection pipeline 1071 is connected to the air spring control unit 102. When the first gas storage unit 210 is used later, the first gas storage unit 210 is connected to the air spring control unit 102 through the first connecting control unit 107. In this way, the connection between the dryer 17 and the air spring control unit 102 and the control of the connection between the dryer 17 and the air spring control unit 102 are facilitated.

Furthermore, in the present disclosure, the gas pressure control unit further includes the second connection control unit 108. One end of the second connection control unit 108 is connected to the air spring control unit 102, and the other end of the second connection control unit 108 is connected to the gas supplying unit 101. The present disclosure facilitates the subsequent connection between the air spring control unit 102 and the gas supplying unit 101 and the second gas storage unit 220 through the setting of the second connection control unit 108, realizes the storage of the gas in the air spring in the second gas storage unit 220 through the air spring control unit 102 and the second connection control unit 108. and also facilitates the gas to enter the gas supplying unit 101 to be finally stored in the first gas storage unit 210. In addition, in the present disclosure, the second connection control unit 108 includes a second connection pipeline 1081, and the second connection pipeline 1081 is provided with a seventh control valve. One end of the second connection pipeline 1081 is connected to the air spring control unit 102, and the other end of the second connection pipeline 1081 is connected to the intake pipeline 291 in the gas supplying unit 101. The setting of the second connection pipeline 1081 facilitates the connection between the second connection control unit 108 and the adjacent pipelines; in addition, the setting of the seventh control valve plays a good control role, which is convenient for the control of an and off of the second connection pipeline 1081 during subsequent use.

Furthermore, in the present disclosure, the gas pressure control unit further includes the third connection control unit 110. The setting of the third connection control unit 110 in the present disclosure facilitates the connection between the first gas storage unit 210 and the gas supplying unit 101, and facilitates the gas in the first gas storage unit 210 to enter the subsequent air spring control unit 102 through the gas supplying unit 101 during subsequent use; furthermore, in the present disclosure, one end of the third connection control unit 110 is connected to the first gas storage unit 210, and the other end of the third connection control unit 110 is connected to the gas supplying unit 101. The third connection control unit 110 includes a third connection pipeline 1101, and the third connection pipeline 1101 is provided with a sixth control valve. One end of the third connection pipeline 1101 is connected to the first gas storage unit 210, and the other end of the third connection pipeline 1101 is connected to the intake pipeline 291 in the gas supplying unit 101. In this way, the connection between the first gas storage unit 210 and the gas supplying unit 101 is facilitated.

In addition, in the present disclosure, the first connection control unit 107 and the second connection control unit 108 play a good bridging connection role, which can control the trajectory of the gas running in the gas pressure control unit, making it more in line with actual design requirements. In actual use, the gas discharged from the air spring can pass through the dryer 17 and then enter the first gas storage tank 21, so as to achieve the dryness of the subsequent stored gas and facilitate subsequent reuse.

Furthermore, in the present disclosure, one end of the third connection control unit 110 is connected to the first gas storage unit 210, and the other end of the third connection control unit 110 is connected to the gas supplying unit 101; one end of the second connection control unit 108 is connected to the air spring control unit 102, and the other end of the second connection control unit 108 is connected to the gas supplying unit 101; the third connection control unit 110 includes the third connection pipeline 1101, and the third connection pipeline 1101 is provided with a sixth control valve 6. One end of the third connection pipeline 1101 is connected to the fourth connection pipeline 1041, and the other end of the third connection pipeline 1101 is connected to the intake pipeline 291. The second connection control unit 108 includes the second connection pipeline 1081, and the second connection pipeline 1081 is provided with a seventh control valve 7. One end of the second connection pipeline 1081 is connected to the air spring control unit 102, and the other end of the second connection pipeline 1081 is connected to the intake pipeline 291. According to the above structural design, the gas flow direction can be controlled by controlling the opening and closing of the sixth control valve 6 and the seventh control valve 7.

In addition, in the present disclosure, the second connection control unit 108 is mainly used for improving the response speed of the air spring group. Another function is to facilitate the discharge of the gas in the air spring assembly. The discharged gas can be stored in the first gas storage unit 210 through the dryer 17 or directly stored in the first gas storage unit 210.

Meanwhile, in the present disclosure, one end of the third connection control unit 110 is connected to the first gas storage unit 210, and the other end of the third connection control unit 110 is connected to the gas supplying unit 101. The third connection control unit 110 includes the third connection pipeline 1101, and the third connection pipeline 1101 is provided with a sixth control valve. One end of the third connection pipeline 1101 is connected to the fourth connection pipeline 1041, and the other end of the third connection pipeline 1101 is connected to the intake pipeline 291. In the present disclosure, one function of the third connection control unit 110 is to facilitate the connection between the first gas storage tank 21 and the gas supplying unit 101, which facilitates the gas in the first gas storage tank 21 to be pressurized by the gas supplying unit 101 and then supplied to the air spring assembly, so as to avoid the problem that the first gas storage unit 210 cannot continuously supply gas when the internal pressure of the air spring assembly is relatively high.

Furthermore, in the present disclosure, the gas pressure control unit further includes the fourth connection control unit 104 and/or the fifth connection control unit 111. In the present disclosure, the fourth connection control unit 104 is used for connecting the first gas storage tank 21 with the gas supplying unit 101, and the fifth connection control unit 111 is used for connecting the second gas storage tank 22 with the gas supplying unit 101, the second connection control unit 108 and/or the third connection control unit 110, thereby facilitating the connection between the external first gas storage tank 21 and the second gas storage tank 22 with the gas pressure control unit.

Meanwhile, in the present disclosure, one end of the fourth connection control unit 104 is connected to the first gas storage unit 210, and the other end of the fourth connection control unit 104 is connected to the first connection control unit 107 or the air spring control unit 102. The fourth connection control unit 104 includes a fourth connection pipeline 1041, and the fourth connection pipeline 1041 is provided with the fifth control valve 5. One end of the fourth connection pipeline 1041 is connected to the first gas storage unit 210, and the other end of the fourth connection pipeline 1041 is connected to the first connection control unit 107 or the air spring control unit 102. The fourth connection control unit 104 of the present disclosure is essentially a pipeline mechanism with valve body control, mainly used for the connection between the first gas storage unit 210 and the air spring control unit 102. There are two main connection modes. One of the connection modes is that the fourth connection control unit 104 is directly connected to the air spring control unit 102, so that the first gas storage unit 210 can be directly connected to the air spring control unit 102; the other of the connection modes is that the fourth connection control unit 104 is connected to the air spring control unit 102 through the first connection control unit 107. The setting of the first connection control unit 107 can realize the cut-off control of the drying unit 105 and the air spring control unit 102, so as to facilitate the subsequent air storage operation of the first gas storage unit 210.

In addition, in the present disclosure, one end of the fifth connection control unit 111 is connected to the second gas storage unit 220, and the other end of the fifth connection control unit 111 is connected to the intake pipeline 291 and/or the second connection control unit 108 and/or the third connection control unit 110 in the gas supplying unit 101. The present disclosure facilitates the connection between the second gas storage tank 22 and the associated components in the gas pressure control unit through the setting of the fifth connection control unit 111. In actual arrangement, the fifth connection control unit 111 includes the fifth connection pipeline 1111, and the fifth connection pipeline 1111 is provided with the ninth control valve 9. One end of the fifth connection pipeline 1111 is connected to the second gas storage unit 220, and the other end of the fifth connection pipeline 1111 is connected to the intake pipeline 291 in the gas supplying unit 101 and/or the second connection control unit 108 and/or the third connection control unit 110. When the fifth connection pipeline 1111 is connected to the intake pipeline 291, the second connection pipeline 1081 and the third connection pipeline 1101, the second gas storage unit 220 can be connected to the adjacent pipelines, which is convenient for controlling the gas flow direction.

Furthermore, in the present disclosure, the gas supplying unit 101 includes a compressor 3; the compressor 3 is connected to a drive motor, and the compressor 3 includes one or more air compression pumps. The compressor 3 is connected to the intake pipeline 291 and an exhaust pipeline 301. In actual arrangement, the sixth connection pipe in the sixth connection control unit is connected to the corresponding adjacent external pipeline 1031 through the exhaust pipeline 301. In actual use, the compressor 3 is connected to the corresponding external pipeline 1031 on the drying unit 105 through the exhaust pipeline 301. The compressor 3 is mainly used for supplying or discharging gas in the gas supply unit 1, and at the same time, in the present disclosure, the compressor 3 is connected to the intake pipeline 291. The setting of the intake pipeline 291 plays a good connection role, and in actual arrangement, the intake pipeline 291 can be directly connected to the atmosphere, so as to facilitate the subsequent use of the compressor 3 to perform the air supply operation; and then realize the air supply operation for the entire gas supply system or the gas pressure control unit. Meanwhile, in the present disclosure, the drying unit 105 includes a dryer 17, a throttle valve, a one-way valve and other structures, which can be specifically referring to the accompanying drawings. The setting of the dryer 17 can dry the gas passing through the dryer 17, reduce the water content in the gas, and prevent the water in the gas from affecting the service life of the air spring. In addition, in the present disclosure, the pipeline unit 103 includes the external pipelines 1031. The setting of the external pipelines 1031 plays a good bridging role, which facilitates the connection between the dryer 17 and the gas supplying unit 101 and the air spring control unit 102. Specifically, in the present disclosure, the dryer 17 is connected to the gas supplying unit 101 and the air spring control unit 102 respectively through the external pipelines 1031. The dryer 17 is connected to the compressor 3 in the gas supplying unit 101 through one external pipeline 1031, and the dryer 17 is connected to the air spring control unit 102 through another external pipeline 1031. In this way, the gas supplying unit 101, the drying unit 105 and the air spring control unit 102 form a loop, which is convenient for the subsequent air supply or exhaust operation of the air spring assembly 201, and then realizes the subsequent normal use of the air spring assembly 201.

Meanwhile, in the present disclosure, the first gas storage unit 210 includes the first gas storage tank 21, and the first gas storage tank 21 is connected to the fourth connection control unit 104. Specifically, the first gas storage tank 21 is connected to the fourth connection control unit 104 through a first gas storage external pipeline. The second gas storage unit 220 includes the second gas storage tank 22, and the second gas storage tank 22 is connected to the fifth connection control unit 111. Specifically, the second gas storage tank 22 is connected to the fifth connection control unit 111 through a second gas storage external pipeline. According to the design, the connection between the first gas storage tank 21 and the second gas storage tank 22 and the adjacent components is facilitated.

In addition, in the present disclosure, the gas pressure in the second gas storage unit 220 is lower than the gas pressure in the first gas storage unit 210. In this way, the present disclosure keeps the second gas storage tank 22 in a low-pressure state for a long time, which facilitates the rapid movement of the gas in the air spring assembly to the second gas storage tank 22, thereby improving the response speed when the vehicle body is lowered; meanwhile, the gas in the second gas storage unit 220 can be transferred to the first gas storage unit 210 through the gas supplying unit 101, so that the gas pressure in the first gas storage unit 210 is better guaranteed and the gas pressure in the second gas storage unit 220 is reduced.

Furthermore, in the present disclosure, the gas pressure control unit further includes a sixth connection control unit. The sixth connection control unit includes a sixth connection pipeline, and the sixth connection pipeline is provided with a fifteenth control valve. The sixth connection control unit is connected to the adjacent external pipeline 1031. In actual arrangement, the sixth connection control unit 109 of the present disclosure is connected to a position between the gas supplying unit 101 and the drying unit 105, mainly connected to the exhaust pipeline 301 of the compressor 3, and connected to the corresponding external pipeline 1031 through the exhaust pipeline 301. The present disclosure is convenient for subsequent use through the setting of the sixth connection control unit 109. The discharge operation of the gas to the outside of the gas pressure control unit through the dryer 17 can facilitate the contraction of the air spring and realize the lowering operation of the vehicle body. Meanwhile, the gas is discharged through the dryer 17 to realize regeneration of the desiccant in the dryer 17, thereby improving the service life of the dryer 17. Specifically, in the present disclosure, the sixth connection control unit 109 includes the sixth connection pipeline, and the sixth connection pipeline is provided with a fifteenth control valve 15. The sixth connection pipeline is connected to the corresponding external pipeline 1031. In the present disclosure, the setting of the fifteenth control valve 15 can be used for controlling on and off of the sixth connection pipeline, thereby facilitating the control of the gas to be discharged through the sixth connection pipeline as needed.

Furthermore, in the present disclosure, the gas pressure control unit further includes a pressure limiting control unit 106. The pressure limiting control unit 106 includes a pressure limiting pipeline 1061; the pressure limiting pipeline 1061 is provided with a pressure limiting valve; the pressure limiting pipeline 1061 is connected to the adjacent external pipeline 1031. In the present disclosure, the pressure limiting control unit 106 is connected to a position between the gas supplying unit 101 and the drying unit 105, and specifically in the present disclosure, the pressure limiting control unit 106 is connected to the exhaust pipeline 301. The pressure limiting control unit 10 disclosed in the present disclosure 6 can be used for controlling the pressure of the pipeline in the gas pressure control unit to avoid excessive pressure in the pipeline of the gas pressure control unit. Specifically, in the present disclosure, the pressure limiting control unit 106 includes the pressure limiting pipeline 1061; the pressure limiting pipeline 1061 is provided with the pressure limiting valve; the pressure limiting pipeline 1061 is connected to the exhaust pipeline 301, so as to realize the connection with the external pipeline 1031. The pressure limiting valve acts as a switch, which is mainly used for controlling on and off of the pressure limiting pipeline 1061, so as to facilitate the control of the gas pressure in the pipeline of the gas pressure control unit in subsequent use.

Furthermore, in the present disclosure, the gas pressure control unit further includes a detection unit connected to the air spring control unit 102. The detection unit includes a pressure sensor disposed on the air spring control unit 102. The setting of the pressure sensor 27 of the present disclosure is mainly used for detecting a pressure of a gas circuit in the gas pressure control unit to ensure the normal operation of the gas pressure control unit.

The present disclosure further provides an air spring system for a vehicle, including the air spring assembly 201. The air spring assembly 201 includes a plurality of air springs; the air spring assembly 201 is connected to the gas supply system. The air spring system disclosed in the present disclosure is provided with the gas supply system. A strategy of double gas storage tanks is adopted to improve the adjustment response speed of the gas supply system to the lowering of the vehicle body. Meanwhile, in actual design, the gas supply system disclosed in the present disclosure can be provided with different numbers of control valves as needed; that is, a suitable gas supply system is selected as needed, thereby increasing the scope of application of the present disclosure, and avoiding the problem of excessive cost caused by using a single type of gas supply system for different vehicle models.

In addition, in actual design, the air spring control unit 102 disclosed in the present disclosure includes a spring main pipeline 202, and the air spring control unit 102 includes a plurality of single spring control units connected to the spring main pipeline 202. Each single spring control unit includes a branch pipeline 203 connected to the spring main pipeline 202, and a branch control valve is provided on the branch pipeline 203.

During actual mounting, four single spring control units are generally provided mainly for use with four air springs. One single spring control unit corresponds to one air spring. The branch control valves disposed on the four single spring control units are mainly called a tenth control valve 10, an eleventh control valve 11, a twelfth control valve 12 and a thirteenth control valve 13 in terms of different setting positions. Meanwhile, the air springs are divided into a first air spring 23, a second air spring 24, a third air spring 25 and a fourth air spring 26 in terms of different setting positions, which can be found in the accompanying drawings for details.

In actual implementation, the air spring system disclosed in the present disclosure can be provided with six valve bodies, nine valve bodies, and ten valve bodies. The six valve bodies, nine valve bodies, and ten valve bodies mainly refer to the count of control valves provided in the air spring system. Although the six valve bodies have low cost, the response speed is slow, which is not described here. When the solution of ten valve bodies is adopted, the gas suspension adjustment speed can be improved. The solution of nine valve bodies can improve the response speed of the air spring system to a certain extent without increasing the production investment too much.

The specific implementation solution is as follows.

The gas supply system disclosed in the present disclosure is mainly used for an air spring system of a motor vehicle. The gas supply unit 1 disclosed in the present disclosure includes the gas supply unit 1 and the drying unit 105. The gas supply unit 1 is connected to the drying unit 105 through the pipeline unit 103. The drying unit 105 includes the dryer 17. The gas supply unit 1 mainly includes the valve block 2, the ECU 20 controller and the gas pressure control unit. The gas pressure control unit includes the gas supplying unit 101, the air spring control unit 102, the gas storage unit, the sixth connection control unit 109, the pressure limiting control unit 106, a bridging control unit 108, the detection unit, the first connection control unit 107, etc.

In the present disclosure, the gas storage unit includes the first gas storage unit 210 and the second gas storage unit 220. Both the first gas storage unit 210 and the second gas storage unit 220 need to be connected to the air spring control unit 102. In this way, in actual use, the gas in the air spring assembly 201 can flow to the two gas storage units at the same time or to one of the gas storage units. The two gas storage units can be independent or integrated together but separated into two cavities.

In the present disclosure, the gas supplying unit 101 mainly includes the compressor 3, which may be an air compression pump and other components and used for supplying gas to the entire gas pressure control unit and controlling the flow direction of the gas. In actual use, the air compression pump or the compressor 3 is arranged in the valve block 2, and is driven by an eccentric shaft at an output end of a brushed motor or a brushless motor. The design quantity of air pump may be greater than or equal to 1.

In addition, the ECU 20 controller of the present disclosure is required to be connected to a vehicle power supply, a communication network, a sensor, a control switch, etc. through connectors; meanwhile, the ECU 20 controller of the present disclosure can integrate the control function of an electronically controlled shock absorber and be connected to at least one vehicle electronically controlled shock absorber through the connectors.

When the gas supply system disclosed in the present disclosure is used for a vehicle, an air spring system for the vehicle is formed. The air spring system disclosed in the present disclosure can adjust the height of the entire vehicle, the height of a certain axle of the vehicle, or the height of an air spring on a certain side of the vehicle.

In addition, the control valve disclosed above may adopt a solenoid valve structure during actual design; specifically, the control valve may be a two-position and two-way solenoid valve.

According to the disclosure of the above components and pipelines, the air spring system disclosed in the present disclosure has multiple implementation solutions.

Examples of the solutions are as follows:

### Embodiment 1:

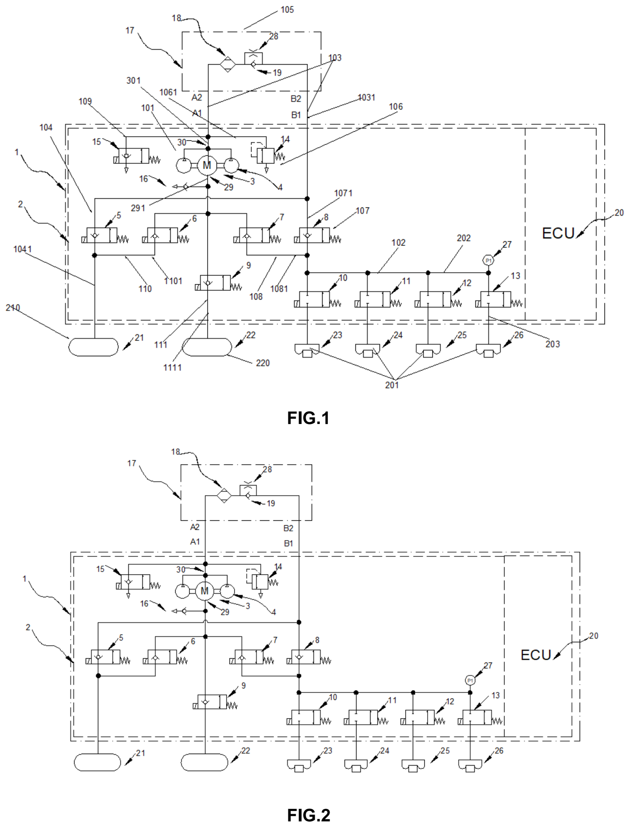

A gas supply system is shown in FIG. 1, including: the air spring assembly 201 containing compressed gas, the compressor 3, the dryer 17, the first gas storage tank 21 and the second gas storage tank 22, fifth to thirteenth control valves, a pressure limiting valve 14 and the valve block 2, the pressure sensor 27 and the ECU 20.

The first gas storage tank 21 is connected to an inlet 29 of the compressor 3 through the sixth control valve 6, and the second gas storage tank 22 is connected to the inlet 29 of the compressor 3 through the ninth control valve 9.

An outlet 30 of the compressor 3 is connected to the air spring assembly 201 through the dryer 17, the eighth control valve 8, and a branch control valve; the outlet 30 of the compressor 3 is connected to the first gas storage tank 21 through the dryer 17 and the fifth control valve 5; meanwhile, in the present disclosure, the compressor 3 is connected to the air compression pump 4; the exhaust pipeline 301 is provided at the outlet 30 of the compressor 3; the compressor 3 is connected to adjacent pipes or components through the exhaust pipeline 301.

The dryer 17 contains a drying medium 18, a one-way valve 19 and a throttle hole 28; the air spring assembly 201 is connected to the inlet 29 of the compressor 3 through the branch control valve and the seventh control valve 7.

### 1. Adjustment of the height of the vehicle body and the spring height

In the process of adjusting the height of the vehicle body downward, the air spring 23 in the air spring assembly 201 is selected as a representative to explain the working principle of the air pump system.

First, a closed working principle of the system is explained. The ECU 20 drives the tenth control valve 10, the seventh control valve 7 and the fifth control valve 5 to switch from a first state shown in FIG. 1 to a second state, and drives the compressor 3 to transport the compressed gas from the air spring 23 through the tenth control valve 10, the seventh control valve 7, the compressor 3, the dryer 17 and the fifth control valve 5, i.e., a path 1, to the first gas storage tank 21, thereby reducing the height of the air spring 23; in parallel, the ECU 20 simultaneously drives the ninth control valve 9 to switch from the first state shown in FIG. 1 to the second state, and the compressed gas in the air spring 23 can flow to the second gas storage tank 22 through the tenth control valve 10, the seventh control valve 7 and the ninth control valve 9, i.e., a path 2, so as to reduce the height of the vehicle body. When the height of the vehicle body reaches a target value, the ECU 20 stops driving the seventh control valve 7 and the tenth control valve 10, and the compressor 3 continues working. The compressed gas in the second gas storage tank 22 is transported to the first gas storage tank 21 through the compressor 3, the dryer 17 and the fifth control valve 5. When the reserve of the compressed gas in the second gas storage tank 22 reaches a set target (e.g., it can be determined by the pressure sensor 27), the ECU 20 stops driving the ninth control valve 9, the compressor 3 and the fifth control valve 5.

Optionally, the system may lower the height of the vehicle body via the path 1 or the path 2 independently.

Optionally, the system may work according to an open principle. The ECU 20 drives the eighth control valve 8, the tenth control valve 10 and the fifteenth control valve 15 to switch from the first state shown in FIG. 1 to the second state. The compressed gas in the air spring 23 can flow into the atmosphere through the tenth control valve 10, the eighth control valve 8, the dryer 17 and the fifteenth control valve 15, i.e., a path 3, thereby lowering the height of the vehicle body. When the height of the vehicle body reaches the target value, the ECU 20 stops driving the eighth control valve 8, the tenth control valve 10 and the fifteenth control valve 15.

During the process of adjusting the height of the vehicle body upward, the air spring 23 in the air spring assembly 201 is selected as a representative to explain the working principle of the air pump system.

Optionally, the ECU 20 drives the sixth control valve 6, the eighth control valve 8 and the tenth control valve 10 to switch from the first state shown in FIG. 1 to the second state, and drive the compressor 3 to transport the compressed gas from the first gas storage tank 21 to an airbag through the sixth control valve 6, the compressor 3, the dryer 17, the eighth control valve 8 and the tenth control valve 10, i.e., a path 4, thereby lifting the height of the vehicle body. When the height of the vehicle body reaches the target value, the ECU 20 stops driving the sixth control valve 6, the compressor 3, the eighth control valve 8 and the tenth control valve 10.

Optionally, the system may directly lift the vehicle without driving the compressor 3. The ECU 20 drives the fifth control valve 5, the eighth control valve 8 and the tenth control valve 10 to switch from the first state shown in FIG. 1 to the second state. The compressed gas in the first gas storage tank 21 flows to the air spring 23 through the fifth control valve 5, the eighth control valve 8 and the tenth control valve 10, i.e., a path 5, thereby lifting the height of the vehicle body. When the height of the vehicle body reaches the target value, the ECU 20 stops driving the fifth control valve 5, the eighth control valve 8 and the tenth control valve 10.

Optionally, the ECU 20 drives the ninth control valve 9, the eighth control valve 8 and the tenth control valve 10 to switch from the first state shown in FIG. 1 to the second state, and drives the compressor 3 to transport the compressed gas from the second gas storage tank 22 to the airbag through the ninth control valve 9, the compressor 3, the dryer 17, the eighth control valve 8 and the tenth control valve 10, i.e., a path 6, thereby lifting the height of the vehicle. When the height of the vehicle body reaches the target value, the ECU 20 stops driving the ninth control valve 9, the compressor 3, the eighth control valve 8 and the tenth control valve 10.

### 2. The process of gas replenishment

When the gas inside the closed system is insufficient, the air can be supplemented from the atmosphere through the air pump. The ECU 20 drives the compressor 3 and the fifth control valve 5, and the fifth control valve 5 switches from the first state shown in FIG. 1 to the second state. The air in the atmosphere passes through the one-way valve 16, and is compressed by the compressor 3 to pass through the dryer 17 and the fifth control valve 5, i.e., a path 7, and is transported to the first gas storage tank 21. When the gas storage tank reaches the target value (e.g., it is determined by the pressure sensor 27 when the eighth control valve 8 is driven), the ECU 20 stops driving the fifth control valve 5 and the compressor 3.

### 3. Pressure measurement

The gas supply system includes the pressure sensor 27, the position of which is shown in FIG. 1. The pressure sensor 27 is capable of measuring the pressure of the air spring assembly 201, the pressure of the first gas storage tank 21, the pressure of the second gas storage tank 22, and the pressure in the gas circuit. The air spring 23 in the air spring assembly 201 is selected as a representative to explain the working principle of pressure measurement. First, the ECU 20 drives the tenth control valve 10 to switch from the first state shown in FIG. 1 to the second state, the pressure sensor 27 is connected to the air spring 23, and the pressure in the air spring 23 is measured by the pressure sensor 27 and transmitted to the ECU 20.

### 4. The process of desiccant regeneration

When the air spring exhausts gas to the atmosphere through the path 3 described above, the gas flow passes through the desiccant in a reverse direction, which can take away the water in the desiccant and realize the regeneration of the desiccant.

Optionally, the desiccant is regenerated by using the compressed gas in the first gas storage tank 21. The ECU 20 drives the fifth control valve 5 and the fifteenth control valve 15 to switch from the first state shown in FIG. 1 to the second state. The compressed gas in the first gas storage tank 21 can exhaust gas through the fifth control valve 5, the dryer 17 and the fifteenth control valve 15, i.e., a path 8. When the compressed gas flows through the dryer 17, the compressed gas can take away the water vapor in the desiccant. After the desiccant is regenerated, ECU 20 stops driving the fifth control valve 5 and the fifteenth control valve 15.

Optionally, the desiccant is regenerated using the compressed gas in the second gas storage tank 22. The ECU 20 drives the ninth control valve 9, the seventh control valve 7, the eighth control valve 8 and the fifteenth control valve 15, and switches from the first state shown in FIG. 1 to the second state. The compressed gas in the second gas storage tank 22 can be exhausted through the ninth control valve 9, the seventh control valve 7, the eighth control valve 8, the dryer 17, and the fifteenth control valve 15, i.e., a path 9. When the compressed gas flows through the dryer 17, the compressed gas can take away the water vapor in the desiccant. After the desiccant is regenerated, the ECU 20 stops driving the ninth control valve 9, the seventh control valve 7, the eighth control valve 8 and the fifteenth control valve 15.

### 5. The process of air replenishment to tires or other external objects using the gas system

In a specific implementation, the gas system can perform an air replenishment operation for the tires or other external objects.

An implementation solution may be that the gas supplying unit works to perform an air supply operation for the sixth connection control unit by inflating an external object (e.g., a tire) through the sixth connection control unit. That is, the fifteenth control valve is opened, and the air supply operation for the external object is performed through the compressor; meanwhile, the eighth control valve in the first connection control unit is opened to monitor the pressure.

The external object may also be inflated directly through the gas storage unit, while the eighth control valve in the first connection control unit is opened to monitor the pressure.

When the gas storage unit performs an inflating operation for the external object, the first gas storage unit is generally selected for performing the inflating operation because the gas pressure in the first gas storage unit is higher. During specific use, the gas is mainly connected to the drying unit through the first gas storage unit via the fourth connection pipeline in the fourth connecting control unit, and finally discharged from the sixth connecting control unit to realize the inflating operation for the external object.

In actual implementation, the gas supplying unit and the gas storage unit may be used for supplying gas simultaneously to ensure rapid inflating operation for the external object.

### Embodiment 2:

A gas supply system is shown in FIG. 2, including: the air spring assembly 201 containing compressed gas, the compressor 3, the dryer 17, the first gas storage tank 21, fifth control valves 5-8, a branch control valve, the pressure limiting valve 14 and the valve block 2, the pressure sensor 27 and the ECU 20. The first gas storage tank 21 is connected to the inlet 29 of the compressor 3 through the sixth control valve 6. The outlet 30 of the compressor 3 is connected to the air spring assembly 201 through the dryer 17, the eighth control valve 8, and the branch control valve; the outlet 30 of the compressor 3 is connected to the first gas storage tank 21 through the dryer 17 and the fifth control valve 5. The dryer 17 contains a drying medium 18, the one-way valve 19 and the throttle hole 28; the air spring assembly 201 is connected to the inlet 29 of the compressor 3 through the branch control valve and the seventh control valve 7.

### 1. Adjustment of the height of the vehicle body and the spring height

In the process of adjusting the height of the vehicle body downward, the air spring 23 in the air spring assembly 201 is selected as a representative to explain the working principle of the air pump system.

First, the closed working principle of the system is as follows. The ECU 20 drives the tenth control valve 10, the seventh control valve 7 and the fifth control valve 5 to switch from the first state shown in FIG. 1 to the second state, and drives the compressor 3 to transport the compressed gas from the air spring 23 to the first gas storage tank 21 through the tenth control valve 10, the seventh control valve 7, the compressor 3, the dryer 17 and the fifth control valve 5, i.e., a path 11, thereby lowering the height of the air spring 23. When the height of the vehicle body reaches the target value (e.g., it can be determined by the pressure sensor 27), the ECU 20 stops driving the tenth control valve 10, the seventh control valve 7, the compressor 3 and the fifth control valve 5.

The system may also work according to the open principle. The ECU 20 drives the eighth control valve 8, the tenth control valve 10 and the fifteenth control valve 15 to switch from the first state shown in FIG. 1 to the second state. The compressed gas in the air spring 23 can flow into the atmosphere through the tenth control valve 10, the eighth control valve 8, the dryer 17 and the fifteenth control valve 15, i.e., a path 12, thereby lowering the height of the vehicle body. When the vehicle height reaches the target value, the ECU 20 stops driving the eighth control valve 8, the tenth control valve 10 and the fifteenth control valve 15.

In the process of adjusting the height of the vehicle body upward, the air spring 23 in the air spring assembly 201 is selected as a representative to explain the working principle of the air pump system.

The ECU 20 drives the sixth control valve 6, the eighth control valve 8 and the tenth control valve 10 to switch from the first state shown in FIG. 1 to the second state, and drives the compressor 3 to transport the compressed gas from the first gas storage tank 21 to the airbag through the sixth control valve 6, the compressor 3, the dryer 17, the eighth control valve 8 and the tenth control valve 10, i.e., a path 13, thereby lifting the height of the vehicle body. When the height of the vehicle body reaches the target value, the ECU 20 stops driving the sixth control valve 6, the compressor 3, the eighth control valve 8 and the tenth control valve 10. The system can also directly lift the vehicle without driving the compressor 3. The ECU 20 drives the fifth control valve 5, the eighth control valve 8 and the tenth control valve 10 to switch from the first state shown in FIG. 1 to the second state. The compressed gas in the first gas storage tank 21 flows to the air spring 23 through the fifth control valve 5, the eighth control valve 8 and the tenth control valve 10, i.e., a path 14, thereby lifting the height of the vehicle body. When the height of the vehicle body reaches the target value, the ECU 20 stops driving the fifth control valve 5, the eighth control valve 8 and the tenth control valve 10.

### 2. The process of gas replenishment

When the gas inside the closed system is insufficient, the air can be supplemented from the atmosphere through the air pump. The ECU 20 drives the compressor 3 and the fifth control valve 5, and the fifth control valve 5 switches from the first state shown in FIG. 1 to the second state. The air in the atmosphere passes through the one-way valve 16, and the air is compressed by the compressor 3 and then passes through the dryer 17 and the fifth control valve 5 to be transported to the first gas storage tank 21, i.e., a path 15. When the amount of air stored in the gas storage tank reaches the target value (e.g., it can be determined by the pressure sensor 27 when the eighth control valve 8 is driven), the ECU 20 stops driving the fifth control valve 5 and the compressor 3.

### 3. Pressure measurement

The gas supply system includes the pressure sensor 27, the position of which is shown in FIG 1, which can measure the pressure of the air spring assembly 201, the pressure of the first gas storage tank 21, the second gas storage tank 22, and the pressure in the gas circuit. The air spring 23 in the air spring assembly 201 is selected as a representative to explain the working principle of pressure measurement. First, the ECU 20 drives the tenth control valve 10 to switch from the first state shown in FIG. 1 to the second state, the pressure sensor 27 is connected to the air spring 23, and the pressure in the air spring 23 can be measured by the pressure sensor 27 and transmitted to the ECU 20.

### 4. The process of desiccant regeneration

When the air spring exhausts gas to the atmosphere through the path 12 described above, the gas flow passes through the desiccant in a reverse direction, which can take away the water in the desiccant and realize the regeneration of the desiccant.

Optionally, the desiccant is regenerated by using the compressed gas in the first gas storage tank 21. The ECU 20 drives the fifth control valve 5 and the fifteenth control valve 15 to switch from the first state shown in FIG. 1 to the second state. The compressed gas in the first gas storage tank 21 can be exhausted through the fifth control valve 5, the dryer 17 and the fifteenth control valve 15, i.e., a path 16. When the compressed gas flows through the dryer 17, the water vapor in the desiccant can be taken away. After the desiccant is regenerated, the ECU 20 stops driving the fifth control valve 5 and the fifteenth control valve 15.

The desiccant may also be regenerated by the compressed gas in one or more air springs.

The ECU 20 drives one or more branch control valves to switch from the first state shown in FIG. 1 to the second state, and the compressed gas in the air spring corresponding to the driven branch control valve exhausts gas through the tenth control valve 10, the dryer 17 and the fifteenth control valve 15, i.e., a path 25. When the compressed gas flows through the dryer 17, the compressed gas can take away the water vapor in the desiccant.

After the desiccant regeneration is completed, the ECU 20 stops driving the tenth control valve 10 and the fifteenth control valve 15.

### 5. The process of air replenishment to tires or other external objects using the gas system

In a specific implementation, the gas system can perform an air replenishment operation for the tires or other external objects.

An implementation solution may be that the gas supplying unit works to perform the air supply operation for the sixth connection control unit by inflating an external object (e.g., a tire) through the sixth connection control unit. That is, the fifteenth control valve is opened, and the air supply operation for the external object is performed through the compressor; meanwhile, the eighth control valve in the first connection control unit is opened to monitor the pressure.

The external object may also be inflated directly through the gas storage unit, while the eighth control valve in the first connection control unit is opened to monitor the pressure.

When the gas storage unit performs an inflating operation for the external object, the first gas storage unit is generally selected for performing the inflating operation because the gas pressure in the first gas storage unit is higher. During specific use, the gas is mainly connected to the drying unit through the first gas storage unit via the fourth connection pipeline in the fourth connecting control unit, and finally discharged from the sixth connecting control unit to realize the inflating operation for the external object.

In actual implementation, the gas supplying unit and the gas storage unit may be used for supplying gas simultaneously to ensure rapid inflating operation for the external object.

In addition, it should be made clear that the present disclosure discloses a plurality of control valve structures. In specific implementation, the opening and closing of different control valves and the coordination between different control valves can change the flow direction of the gas in the gas supply unit. Different flow directions of gas bring different technical effects. When describing the above embodiments, only the main usage routes of the present disclosure are mainly stated, but the gas flow paths that are not disclosed are also within the protection scope of the present disclosure. Because the essence of the present disclosure is to change the usage mode of the traditional gas supply system by optimizing gas pipelines, etc., the gas flow paths that are not specifically stated above should also be within the protection scope of the present disclosure.

Obviously, the specific implementation of the present disclosure is not limited to the above methods. As long as various non-substantial improvements are made using the method concept and technical solution of the present disclosure, they are all within the protection scope of the present disclosure.

## Claims

1. A gas supply system, comprising a gas supply unit, a drying unit, a pipeline unit, and a gas storage unit;
wherein the gas supply unit is connected to the drying unit through the pipeline unit;
wherein the gas supply unit includes a valve block and an electronic control unit (ECU); wherein a gas pressure control unit is disposed in the valve block;
wherein the gas pressure control unit includes a gas supplying unit, an air spring control unit, and a connection control unit;
wherein the gas supplying unit is connected to the air spring control unit and/or the connection control unit through the drying unit;
wherein the pipeline unit includes external pipelines; the drying unit is connected to the gas supplying unit and the air spring control unit, respectively, through the external pipelines;
wherein the gas pressure control unit is connected to the gas storage unit; the gas storage unit includes a first gas storage unit and/or a second gas storage unit; the first gas storage unit and/or the second gas storage unit are connected to the air spring control unit.

2. The gas supply system according to claim 1, wherein the gas pressure control unit further includes a first connection control unit, and the drying unit is connected to the air spring control unit through the first connection control unit; the first connection control unit includes a first connection pipeline, and the first connection pipeline is provided with an eighth control valve; one end of the first connection pipeline is connected to one of the external pipelines on the drying unit, and the other end of the first connection pipeline is connected to the air spring control unit.

3. The gas supply system according to claim 1, wherein the gas pressure control unit further includes a second connection control unit; one end of the second connection control unit is connected to the air spring control unit, and the other end of the second connection control unit is connected to the gas supplying unit; the second connection control unit includes a second connecting pipe, and the second connection pipeline is provided with a seventh control valve; one end of the second connection pipeline is connected to the air spring control unit, and the other end of the second connection pipeline is connected to an intake pipeline in the gas supplying unit.

4. The gas supply system according to claim 1, wherein the gas pressure control unit further includes a third connection control unit; one end of the third connection control unit is connected to the first gas storage unit, and the other end of the third connection control unit is connected to the gas supplying unit; the third connection control unit includes a third connection pipeline, and the third connection pipeline is provided with a sixth control valve; one end of the third connection pipeline is connected to the first gas storage unit, and the other end of the third connection pipeline is connected to an intake pipeline in the gas supplying unit.

5. The gas supply system according to any one of claims 1-4, wherein the gas pressure control unit further includes a fourth connection control unit and/or a fifth connection control unit; one end of the fourth connection control unit is connected to the first gas storage unit, and the other end of the fourth connection control unit is connected to the first connection control unit or the air spring control unit, the fourth connection control unit includes a fourth connection pipeline, and the fourth connection pipeline is provided with a fifth control valve;
wherein one end of the fourth connection pipeline is connected to the first gas storage unit, and the other end of the fourth connection pipeline is connected to the first connection control unit or the air spring control unit;
wherein one end of the fifth connection control unit is connected to the second gas storage unit, and the other end of the fifth connection control unit is connected to an intake pipeline in the gas supplying unit and/or the second connection control unit and/or the third connection control unit;
wherein the fifth connection control unit includes a fifth connection pipeline, and the fifth connection pipeline is provided with a ninth control valve; one end of the fifth connection pipeline is connected to the second gas storage unit, and the other end of the fifth connection pipeline is connected to the intake pipeline in the gas supplying unit and/or the second connection control unit and/or the third connection control unit.

6. The gas supply system according to any one of claims 1-4, wherein the gas supplying unit includes a compressor; the compressor is connected to an intake pipeline;
wherein the drying unit includes a dryer; wherein the compressor includes at least one air compression pump;
wherein the first gas storage unit comprises a first gas storage tank, and the first gas storage tank is connected to the fourth connection control unit;
wherein the second gas storage unit includes a second gas storage tank, and the second gas storage tank is connected to the fifth connection control unit;
wherein a gas pressure in the second gas storage unit is lower than a gas pressure in the first gas storage unit.

7. The gas supply system according to according to any one of claims 1-4, wherein the gas pressure control unit further includes a sixth connection control unit; the sixth connection control unit includes a sixth connection pipeline, and the sixth connection pipeline is provided with a fifteenth control valve; the sixth connection control unit is connected to an adjacent external pipeline.

8. The gas supply system according to any one of claims 1-4, wherein the gas pressure control unit further includes a pressure limiting control unit; the pressure limiting control unit includes a pressure limiting pipeline; the pressure limiting pipeline is provided with a pressure limiting valve; and the pressure limiting pipeline is connected to an adjacent external pipeline.

9. The gas supply system according to any one of claims 1-4, wherein the gas pressure control unit further includes a detection unit connected to the air spring control unit; wherein the detection unit includes a pressure sensor disposed on the air spring control unit.

10. An air spring system for a vehicle, comprising an air spring assembly, wherein the air spring assembly includes a plurality of air springs; wherein the air spring assembly is connected to the gas supply system as described in any one of claims 1-9.
